# EUROPÄISCHE PATENTSCHRIFT

(11) **EP 0 922 065 B1**
(45) Veröffentlichungstag und Bekanntmachung des Hinweises auf die Patenterteilung: **20.11.2002**
(21) Anmeldenummer: 97944794.3
(22) Anmeldetag: 26.08.1997
(51) Int. Cl.: C08G 69/00, C08G 69/04

(54) **VERFAHREN ZUR HERSTELLUNG VON POLYAMIDEN AUS AMINONITRILEN**
PROCESS FOR PRODUCING POLYAMIDES FROM AMINONITRILES
PROCEDE POUR LA PREPARATION DE POLYAMIDES A PARTIR D'AMINONITRILES

(30) Priorität: 30.08.1996 DE 19635077; 07.03.1997 DE 19709390
(43) Veröffentlichungstag der Anmeldung: 16.06.1999
(73) Patentinhaber: BASF AKTIENGESELLSCHAFT, 67056 Ludwigshafen (DE)
(72) Erfinder: WEISS, Robert, D-67281 Kirchheim (DE); KRAUSS, Dieter, D-67269 Grünstadt (DE); KELLER, Dieter, D-67269 Grünstadt (DE); PIPPER, Gunter, D-67098 Bad Dürkheim (DE); HARDER, Wolfgang, D-69469 Weinheim (DE); LUDWIG, Alfons, D-37671 Höxter (DE); MOHRSCHLADT, Ralf, D-68723 Schwetzingen (DE)
(74) Vertreter: Isenbruck, Günter, Dr.
(86) Internationale Anmeldenummer: EP9704640
(87) Internationale Veröffentlichungsnummer: WO98008889

(56) Entgegenhaltungen:
- EP-A- 0 479 306
- EP-A- 0 702 047
- DE-A- 3 534 817
- US-A- 2 245 129
- US-A- 4 568 736
- Vieweg, Müller; Kunststoff-Handbuch, Bd. VI Polyamide (1966), Carl Hanser Verlag, München, S. 245 und 371

## Beschreibung

Die vorliegenden Erfindung betrifft ein neues Verfahren zur Herstellung von Polyamiden aus Aminonitrilen und Wasser bei erhöhter Temperatur und erhöhtem Druck.

Die US 2 245 129 beschreibt eine diskontinuierliche zweistufige Herstellung von Polycaprolactam aus ω-Aminocapronitril ("ACN") und Wasser bei einer Temperatur im Bereich von 150 bis 300 °C und einem speziellen Temperaturprogramm in Abhängigkeit der zugegebenen Wassermenge und einem Druck von max. 30 bar. Nachteilig an diesem Verfahren sind die langen Reaktionszeiten (20 h in der ersten Stufe), die niedrige Viskosität des erhaltenen Polycaprolactams sowie der hohe Gehalt an flüchtigen Basen (im wesentlichen primäre Säureamide) im Vergleich zu einem Polycaprolactam hergestellt aus Caprolactam.

In der DE-C 35 34 817, US 4 568 736 und US 4 629 776 werden die in der US 2 245 129 beschriebenen Probleme teilweise durch den Einsatz von phosphor- und schwefelhaltigen Katalysatoren gelöst. Die Verwendung der o.g. Katalysatoren verbessert die geringe Raum-Zeit-Ausbeute des in der US 2 245 129 beschriebenen Verfahren. Der Gehalt an flüchtigen Basen sämtlicher Produkte, die nach den o.g. Verfahren hergestellt werden, ist jedoch immer noch zu hoch, so daß die Polyamide schwierig zu verarbeiten sind und eine verringerte Carboxyl-Endgruppenzahl aufweisen. Die Produkte der o.g. Verfahren zeigen aufgrund der stöchiometrischen Diskrepanz zwischen Amino- und Carboxyl-Endgruppen einen unzureichenden Polymerisationsgrad und einen langsamen Molekulargewichtsaufbau während der Temperung.

Ferner ist eine vollständige Abtrennung der Katalysatoren praktisch nicht möglich, so daß das chemische und physikalische Verhalten der unter Verwendung der Katalysatoren hergestellten Polymeren wie Art und Menge der Endgruppen oder Abknickverhalten beim Verspinnen negativ beeinflusst wird.

In der EP-A 0 479 306 wird bei der Umsetzung von ACN mit Wasser zu Polycaprolactam vorgeschlagen, nach dem Erreichen einer Reaktionstemperatur von 200 bis 260 °C kontinuierlich Ammoniak und Wasser durch Entspannen zu entfernen und gleichzeitig kontinuierlich Wasser zuzusetzen, wobei der Druck im Bereich von 14 bis 24 x 10⁶ Pa (14 bis 24 bar) gewählt wird.

In der EP-A 65 291 wird ein kontinuierliches Verfahren zur Herstellung von Polyamid 66 aus Dinitrilen und Diaminen beschrieben. Der Molekulargewichtsaufbau erfolgt über Polykondensation.

Caprolactam tritt als Zwischenprodukt nicht auf, wohl jedoch bei der Polymerisation von ACN. Somit ist wegen den unterschiedlichen Reaktionsabläufen eine Übertragung des in der EP-A 65 291 genannten Verfahrens auf das vorliegende Problem nicht möglich.

Der vorliegenden Erfindung liegt demnach die Aufgabe zugrunde, ein Verfahren zur Herstellung von Polyamiden aus Aminonitrilen zur Verfügung zu stellen, das eine verbesserte Hydrolyse der Reaktanden, insbesondere der Säureamid-Gruppen, und somit einen höheren Carboxyl-Endgruppengehalt gewährleistet. Der Molekulargewichtsaufbau während der Polymerisation sowie die Temperfähigkeit des Produktes werden auf diese Weise verglichen mit den Verfahren des Standes der Technik verbessert.

Demgemäß betrifft die vorliegende Erfindung ein Verfahren zur Herstellung eines Polyamids durch Umsetzung mindestens eines Amionitrils mit Wasser, das die folgenden Stufen umfaßt:
(1) Umsetzung mindestens eines Aminonitrils mit Wasser in einem Molverhältnis im Bereich von 1:1 bis 1:30 bei einer Temperatur von 100 bis 360 °C, und einem Druck von 6 bis 12 x 10⁶ Pa, wobei ein Umsetzungsgemisch erhalten wird,
(2) weitere Umsetzung des Umsetzungsgemischs bei einer Termperatur von 150 bis 400 °C und einem Druck, der niedriger ist, als der Druck in Stufe 1, wobei die Temperatur und der Druck so gewählt werden, daß eine erste Gasphase und eine erste flüssige oder eine erste feste Phase oder ein Gemisch aus erster fester und erster flüssiger Phase erhalten werden, und die erste Gasphase von der ersten flüssigen oder der ersten festen Phase oder dem Gemisch aus erster flüssiger und erster fester Phase abgetrennt wird, und
(3) Versetzen der ersten flüssigen oder der ersten festen Phase oder des Gemischs aus erster flüssiger und erster fester Phase mit einer gasförmigen oder flüssigen Phase, die Wasser enthält, bei einer Temperatur von 150 bis 400 °C, und einem Druck von 0,1 bis 30 x 10⁶ Pa, wobei ein Produktgemisch erhalten wird.

Ferner betrifft die vorliegende Erfindung ein Verfahren zur Herstellung eines Polyamids durch Umsetzung mindestens eines Aminonitrils mit Wasser, das die folgenden Stufen umfaßt:
(1) Umsetzung mindestens eines Aminonitrils mit Wasser in einem Molverhältnis im Bereich von 1:1 bis 1:30 bei einer Temperatur von 100 bis 360 °C, und einem Druck von 6 bis 12 x 10⁶ Pa, wobei ein Umsetzungsgemisch erhalten wird,
(2) weitere Umsetzung des Umsetzungsgemischs bei einer Termperatur von 150 bis 400 °C und einem Druck, der niedriger ist, als der Druck in Stufe 1, wobei die Temperatur und der Druck so gewählt werden, daß eine erste Gasphase und eine erste flüssige oder eine erste feste Phase oder ein Gemisch aus erster fester und erster flüssiger Phase erhalten werden, und die erste Gasphase von der ersten flüssigen oder der ersten festen Phase oder dem Gemisch aus erster flüssiger und erster fester Phase abgetrennt wird, und
(3) Versetzen der ersten flüssigen oder der ersten festen Phase oder des Gemischs aus erster flüssiger und erster fester Phase mit einer gasförmigen oder flüssigen Phase, die Wasser enthält, bei einer Temperatur von 150 bis 400 °C, und einem Druck von 0,1 bis 30 x 10⁶ Pa, wobei ein Produktgemisch erhalten wird.
(4) Nachkondensation des Produktgemischs bei einer Temperatur von 200 bis 350 °C und einem Druck, der niedriger ist als der Druck der Stufe 3, wobei die Temperatur und der Druck so gewählt werden, daß eine zweite, Wasser und Ammoniak enthaltende Gasphase und eine zweite flüssige oder zweite feste Phase oder ein Gemisch aus zweiter flüssiger und zweiter fester Phase, die (das) jeweils das Polyamid enthält, erhalten werden.

Außerdem wird erfindungsgemäß ein Verfahren zur Herstellung eines Polyamids durch Umsetzung mindestens eines Aminonitrils mit Wasser, das die folgenden Stufen umfaßt:
(1) Umsetzung mindestens eines Aminonitrils mit Wasser in einem Molverhältnis im Bereich von 1:1 bis 1:30 bei einer Temperatur von 100 bis 360 °C, und einem Druck von 6 bis 12 x 10⁶ Pa, wobei ein Umsetzungsgemisch erhalten wird,
(2) weitere Umsetzung des Umsetzungsgemischs bei einer Termperatur von 150 bis 400 °C und einem Druck, der niedriger ist, als der Druck in Stufe 1, wobei die Temperatur und der Druck so gewählt werden, daß eine erste Gasphase und eine erste flüssige oder eine erste feste Phase oder ein Gemisch aus erster fester und erster flüssiger Phase erhalten werden, und die erste Gasphase von der ersten flüssigen oder der ersten festen Phase oder dem Gemisch aus erster flüssiger und erster fester Phase abgetrennt wird, und
(4) Nachkondensation der ersten flüssigen oder ersten festen Phase oder des Gemischs aus erster flüssiger und erster fester Phase bei einer Temperatur von 200 bis 350 °C und einem Druck, der niedriger ist als der Druck der Stufe 3, wobei die Temperatur und der Druck so gewählt werden, daß eine zweite, Wasser und Ammoniak enthaltende Gasphase und eine zweite flüssige oder zweite feste Phase oder ein Gemisch aus zweiter flüssiger und zweiter fester Phase, die (das) jeweils das Polyamid enthält, erhalten werden,
bereitgestellt.

Als Aminonitril können prinzipiell alle Aminonitrile, d.h. Verbindungen, die sowohl mindestens eine Amino- als auch mindestens eine Nitrilgruppe aufweisen, eingesetzt werden. Unter diesen sind ω-Aminonitrile bevorzugt, wobei unter letzteren insbesondere ω-Aminoalkylnitrile mit 4 bis 12 C-Atomen, weiter bevorzugt 4 bis 9 C-Atomen im Alkylenrest, oder ein Aminoalkylarylnitril mit 8 bis 13 C-Atomen eingesetzt werden, wobei dort solche bevorzugt werden, die zwischen der aromatischen Einheit und der Amino- und Nitrilgruppe einen Alkyl-Spacer mit mindestens einem C-Atom aufweisen. Unter den Aminoalkylarylnitrilen sind insbesondere solche bevorzugt, die die Amino- und Nitrilgruppe in 1,4-Stellung zueinander aufweisen.

Als ω-Aminoalkylnitril setzt man weiter bevorzugt lineare ω-Aminoalkylnitrile ein, wobei der Alkylenrest (-CH₂-) vorzugsweise 4 bis 12 C-Atome, weiter bevorzugt von 4 bis 9 C-Atome enthält, wie z.B. 6-Amino-1-cyanopentan (6-Aminocapronitril), 7-Amino-1-cyanohexan, 8-Amino-1-cyanoheptan, 9-Amino-1-cyanooctan, 10-Amino-1-cyanononan, besonders bevorzugt 6-Aminocapronitril.

6-Aminocapronitril erhält man üblicherweise durch Hydrierung von Adipodinitril nach bekannten Verfahren, beispielsweise beschrieben in DE-A 836,938, DE-A 848,654 oder US 5 151 543.

Selbstverständlich können auf Gemische mehrer Aminonitrile oder Gemische eines Aminonitrils mit weiteren Comonomeren, wie z.B. Caprolactam oder das untenstehend näher definierte Gemisch eingesetzt werden.

In einer besonderen Ausführungsform, insbesondere wenn man Copolyamide herstellen möchte, setzt man anstelle von reinem 6-Aminocapronitril folgendes Gemisch ein:
50 bis 99,99, bevorzugt 80 bis 90 Gew.-% 6-Aminocapronitril,
0,01 bis 50, bevorzugt von 1 bis 30 Gew.-% mindestens einer Dicarbonsäure, ausgewählt aus der Gruppe bestehend aus aliphatischen C₄-C₁₀-α,ω-Dicarbonsäuren, aromatischen C₈-C₁₂-Dicarbonsäuren und C₅-C₈-Cycloalkandicarbonsäuren,
0 bis 50 bevorzugt 0,1 bis 30 Gew.-% eines α,ω-Diamins mit 4 bis 10 Kohlenstoffatomen,
0 bis 50 bevorzugt 0 bis 30 Gew.-% eines α,ω-C₂-C₁₂-Dinitrils sowie
0 bis 50 bevorzugt 0 bis 30 Gew.-% eines α,ω-C₅-C₁₂-Aminosäure oder des entsprechenden Lactams,
wobei die Summe der einzelnen Gewichtsprozentangaben 100 % beträgt.

Als Dicarbonsäuren kann man aliphatische C₄-C₁₀-α,ω-Dicarbonsäuren, wie z.B. Bernsteinsäure, Glutarsäure, Adipinsäure, Pimelinsäure, Korksäure, Azelainsäure, Sebazinsäure, bevorzugt Adipinsäure und Sebazinsäure, besonders bevorzugt Adipinsäure, und aromatische C₈-C₁₂-Dicarbonsäuren wie Terephthalsäure sowie C₅-C₈-Cycloalkandicarbonsäuren wie Cyclohexandicarbonsäure einsetzen.

Als α,ω-Diamin mit 4 bis 10 Kohlenstoffatomen kann man Tetramethylendiamin, Pentamethylendiamin, Hexamethylendiamin, Heptamethylendiamin, Octamethylendiamin, Nonamethylendiamin und Decamethylendiamin, bevorzugt Hexamethylendiamin, einsetzen.

Desweiteren ist es auch möglich, Salze aus den genannten Dicarbonsäuren und Diaminen einzusetzen, insbesondere das Salz aus Adipinsäure und Hexamethylendiamin, sogenanntes AH-Salz.

Als α,ω-C₂-C₁₂-Dinitril setzt man bevorzugt aliphatische Dinitrile, wie z.B. 1,4-Dicyanbutan (Adipodinitril), 1,5-Dicyanpentan, 1,6-Dicyanhexan, 1,7-Dicyanheptan, 1,8-Dicyanoctan, 1,9-Dicyannonan, 1,10-Dicyandecan, besonders bevorzugt Adipodinitril, ein.

Gewünschtenfalls kann man auch Diamine, Dinitrile und Aminonitrile, die sich von verzweigten Alkylen- oder Arylen- oder Alkylarylenen ableiten, verwenden.

Als α,ω-C₅-C₁₂-Aminosäure kann man 5-Aminopentansäure, 6-Aminohexansäure, 7-Aminoheptansäure, 8-Aminooctansäure, 9-Aminononansäure, 10-Aminodecansäure, 11-Aminoundecansäure und 12-Aminododecansäure, bevorzugt 6-Aminohexansäure, einsetzen.

Erfindungsgemäß wird in einer ersten Stufe (Stufe 1) ein Aminonitril mit Wasser, bei einer Temperatur von 100 bis 360 °C, vorzugsweise 200 bis 350 °C und insbesondere bei 250 bis 300 °C erhitzt, wobei ein Druck von 6 bis 12 x 10⁶ Pa eingestellt wird. Dabei können in dieser Stufe Druck und Temperatur so aufeinander abgestimmt werden, daß eine flüssige oder eine feste Phase und ein Gemisch aus flüssiger oder fester Phase und eine gasförmige Phase erhalten werden.

Erfindungsgemäß setzt man Wasser in einem Molverhältnis von Aminoalkylnitril zu Wasser im Bereich von. 1:1 bis 1:30, besonders bevorzugt von 1:2 bis 1:10, ganz besonders bevorzugt von 1:2 bis 1:4, ein, wobei der Einsatz von Wasser im Überschuß, bezogen auf das eingesetzte Aminoalkylnitril bevorzugt ist.

Bei dieser Ausführungsform entspricht die flüssige oder feste Phase oder das Gemisch aus flüssiger und fester Phase dem Umsetzungsgemisch, während die gasförmige Phase abgetrennt wird. Dabei können im Rahmen dieser Stufe die gasförmige Phase sofort von der flüssigen oder festen Phase oder dem Gemisch aus fester oder flüssiger Phase abgetrennt werden, oder das sich innerhalb dieser Stufe bildende Reaktionsgemisch kann zweiphasig flüssig-gasförmig, fest-gasförmig oder flüssig/fest-gasförmig vorliegen. Selbstverständlich können Druck und Temperatur auch so aufeinander abgestimmt werden, daß das Reaktionsgemisch einphasig-fest oder -flüssig vorliegt.

Die Abtrennung der Gasphase kann durch den Einsatz von gerührten oder nicht-gerührten Abscheidekesseln oder Kesselkaskaden sowie durch den Einsatz von Verdampferapparaten erfolgen, z.B. durch Umlaufverdampfer oder Dünnschichtverdampfer, wie z.B. durch Filmextruder oder durch Ringscheibenreaktoren, die eine vergrößerte Phasengrenzfläche garantieren. Gegebenenfalls ist ein Umpumpen der Reaktionsmischung bzw. der Einsatz eines Schlaufenreaktors notwendig, um die Phasengrenzfläche zu vergrößern.

Des weiteren kann die Abtrennung der Gasphase durch die Zugabe von Wasserdampf oder Inertgas in die flüssige Phase gefördert werden.

Bevorzugt wird bei einer vorgewählten Temperatur der Druck so eingestellt, daß er kleiner ist als der Gleichgewichtsdampfdruck von Ammoniak, jedoch größer als der Gleichgewichtsdampfdruck der übrigen Komponenten im Reaktionsgemisch bei der vorgegebenen Temperatur. Auf diese Weise kann insbesondere die Abscheidung von Ammoniak begünstigt und somit die Hydrolyse der Säureamidgruppen beschleunigt werden.

In Stufe 1 können Rührkessel, Strömungsrohre oder Kesselkaskaden eingesetzt werden. Bei einer zweiphasigen Fahrweise wird der Einsatz von Kesseln oder einer Reaktionskolonne bevorzugt, während bei einer einphasigflüssigen Fahrweise als bevorzugte Ausführungsform ein Strömungsrohr, versehen mit Füllkörpern, einzusetzen ist. Der Einsatz eines Rohrbündelreaktors, wahlweise mit Füllkörpern ausgerüstet, in der ersten Verfahrensstufe ist ebenfalls möglich und insbesondere bei einer zweiphasigen Fahrweise vorteilhaft, um den Wärmeaustausch zu verbessern und die axiale Rückvermischung der Reaktanden weiter zu verringern.

Als Füllkörper können z.B. Raschig-Ringe oder Sulzer-Mischelemente verwendet werden, um eine schmale Verweilzeitverteilung zu gewährleisten und um die Rückvermischung zu begrenzen.

In einer weiteren Ausführungsform wird der Reaktor der ersten Stufe von oben nach unten durchströmt, wobei dieser wiederum bevorzugt mit Füllkörpern versehen ist, die eine axiale Rückvermischung der Reaktanden einschränken. Hierdurch erreicht das im Reaktor freiwerdende Ammonik-Gas welches vorwiegend direkt nach dem Eintritt in den Reaktor entsteht, auf kürzestem Weg die Gasphase am Kopf des Reaktors. Die Störung des Strömungsprofils im weiteren Verlauf des Reaktors durch aufsteigende Gasblasen bzw. Konvektion ist deshalb gering.

Bzgl. der Verweilzeit des Reaktionsgemischs in der ersten Stufe bestehen keinerlei Beschränkungen; sie wird jedoch im allgemeinen im Bereich von ungefähr 10 Minuten bis ungefähr 10 Stunden, vorzugsweise zwischen ungefähr 30 Minuten und ungefähr 6 Stunden gewählt.

Obwohl auch bzgl. des Umsatzes an Nitrilgruppen in Stufe 1 keinerlei Beschränkungen existieren, beträgt insbesondere aus wirtschaftlichen Gründen der Umsatz an Nitrilgruppen in Stufe 1 im allgemeinen nicht weniger als ungefähr 70 mol-%, vorzugsweise mindestens ungefähr 95 mol-% und insbesondere ungefähr 97 bis ungefähr 99 mol-%, jeweils bezogen auf die Molzahl an eingesetztem Aminonitril.

Den Umsatz an Nitrilgruppen ermittelt man üblicherweise mittels IR-Spektroskopie (CN-Valenz-Schwingung bei 2247 Wellenzahlen), NMR oder HPLC, bevorzugt durch IR-Spektroskopie.

In einer weiteren bevozugten Ausführungsform wird das Aminonitril/Wasser-Gemisch kontinuierlich mit Hilfe eines Wärmetauschers erhitzt, und das so erhitzte Gemisch in ein auf die gleiche Temperatur temperiertes Reaktionsgefäß, vorzugsweise ein Rohr, das ggf. Einbauten wie Sulzer-Mischelemente enthalten kann, um Rückvermischungen zu vermeiden, eingeführt. Selbstverständlich können das Aminonitril und das Wasser auch getrennt voneinander aufgeheizt werden.

Weiterhin ist es erfindungsgemäß nicht ausgeschlossen, die Umsetzung in Stufe 1 auch in Gegenwart von sauerstoffhaltigen Phosphorverbindungen, insbesondere Phosphorsäure, phosphorige Säure und hypophosphorige Säure sowie deren Alkalimetall- und Erdalkalimetallsalze und Ammoniumsalze wie Na₃PO₄, NaH₂PO₄, Na₂HPO₄, NaH₂PO₃, Na₂HPO₃, NaH₂PO₂, K₃PO₄, KH₂PO₄, K₂HPO₄, KH₂PO₃, K₂HPO₃, KH₂PO₂ durchzuführen, wobei man das Molverhältnis von ω-Aminonitril zu Phosphorverbindungen im Bereich von 0,01:1 bis 1:1, bevorzugt von. 0,01:1 bis 0,1:1 wählt.

Desweiteren ist nicht ausgeschlossen, auch bekannte Metalloxide, wie z.B. Titandioxide, Zirkonoxid, Auluminiumoxid, Lanthanoxid, Magnesiuoxid, etc, bevorzugt Titandioxide zur heterogenen Katalyse in den einzelnen Verfahrensstufen einzusetzen, um den Umsatz, insbesondere der Nitrilgruppen zu fördern. Dabei werden die oben genannten Metalloxide nicht in Stufe 4 eingesetzt, können jedoch in Stufen 1 bis 3 eingesetzt werden, wobei der Einsatz in Stufe 1 bevorzugt ist.

Erfindungsgemäß wird das in der ersten Stufe erhaltene Umsetzungsgemisch in Stufe 2 bei einer Temperatur von 150 bis 400 °C, vorzugsweise einer Temperatur im Bereich von 220 bis 350 °C und insbesondere im Bereich von 250 bis 290 °C und einem Druck, der niedriger ist als der Druck in Stufe 1 weiter umgesetzt. Vorzugsweise ist der Druck in der zweiten Stufe mindestens 0,5 x 10⁶ Pa niedriger als der Druck in Stufe 1, wobei im allgemeinen der Druck im Bereich von 0,05 bis 5 x 10⁶ Pa liegt.

Dabei werden in Stufe 2 die Temperatur und der Druck so gewählt, daß eine erste Gasphase und eine erste flüssige oder erste feste Phase oder ein Gemisch aus erster flüssiger und erster fester Phase erhalten werden, und die erste Gasphase von der ersten flüssigen oder ersten festen Phase oder dem Gemisch aus erster flüssiger und erster fester Phase abgetrennt wird.

Die erste gasförmige Phase, die im wesentlichen aus Ammoniak und Wasserdampf besteht, entfernt man im allgemeinen kontinuierlich mit Hilfe einer Destillationsvorrichtung, wie z.B. einer Destillationskolonne. Die bei dieser Destillation ggf. mitabgeschiedenen organischen Bestandteile des Destillats, im überwiegendem Maße nicht umgesetztes Aminonitril, kann in Stufe 1 und/oder Stufe 2 vollständig oder teilweise zurückgeführt werden.

Die Verweilzeit des Umsetzungsgemisch in Stufe 2 unterliegt keinerlei Beschränkungen, beträgt jedoch im allgemeinen 10 Minuten bis 5 Stunden, vorzugsweise 15 Minuten bis 4 Stunden.

Die Produktleitung zwischen der ersten und zweiten Stufe enthält ggf. Füllkörper, wie z.B. Raschig-Ringe oder Sulzer-Mischelemente, die eine kontrollierte Entspannung des Umsetzungsgemischs in die Gasphase ermöglichen.

In Stufe 3 wird die erste flüssige oder die erste feste Phase oder das Gemisch aus erster flüssiger und erster fester Phase mit einer gasförmigen oder flüssigen Phase, die Wasser enthält, vorzugsweise Wasser oder Wasserdampf versetzt. Vorzugsweise geschieht dies kontinuierlich. Die Menge an zugegebenem Wasser (als Flüssigkeit) liegt vorzugsweise im Bereich von 50 bis 1500 ml, weiter bevorzugt 100 bis 500 ml, jeweils bezogen auf 1 kg der ersten flüssigen oder ersten festen Phase oder des Gemischs aus erster flüssiger und erster fester Phase. Durch diesen Wasserzusatz werden in erster Linie die in der Stufe 2 verursachten Wasserverluste kompensiert und die Hydrolyse von Säureamidgruppen im Reaktionsgemisch gefördert. Daraus resultiert als weiterer Vorteil dieser Erfindung, daß das Gemisch der Ausgangsprodukte, wie es in Stufe 1 eingesetzt wird, lediglich mit einem kleinen Wasserübschuß eingesetzt werden kann.

Vorzugsweise wird die Wasser enthaltende gasförmige oder flüssige Phase vor der Einleitung in Stufe 3 in einem Wärmetauscher vorgeheizt und anschließend mit der ersten flüssigen oder der ersten festen Phase oder dem Gemisch aus erster fester und erster flüssiger Phase vermischt. Dabei können ggf. Mischelemente im Reaktor eingesetzt werden, die die Durchmischung der Komponenten fördern.

Stufe 3 wird bei einer Temperatur von 150 bis 400 °C und einem Druck von 0,1 bis 30 x 10⁶ Pa betrieben.

Dabei können Druck und Temperatur so aufeinander abgestimmt werden, daß das Reaktionsgemisch einphasig-flüsssig oder einphasig-fest vorliegt. In einer anderen Ausführungsform werden Druck und Temperatur so gewählt, daß eine flüssige oder eine feste Phase oder ein Gemisch aus fester und flüssiger Phase sowie eine gasförmige Phase erhalten werden. Bei dieser Ausführungsform entspricht die flüssige oder feste Phase oder das Gemisch aus flüssiger und fester Phase dem Produktgemisch, während die gasförmige Phase abgetrennt wird. Dabei kann im Rahmen dieser Stufe die gasförmige Phase sofort von der flüssigen oder festen Phase oder dem Gemisch aus fester oder flüssiger Phase abgetrennt werden, oder das sich innerhalb dieser Stufe bildende Reaktionsgemisch zweiphasig flüssig-gasförmig, fest-gasförmig oder flüssig/fest-gasförmig vorliegen.

Bei einer vorgewählten Temperatur kann der Druck so eingestellt werden, daß er kleiner ist als der Gleichgewichtsdampfdruck von Ammoniak, jedoch größer als der Gleichgewichtsdampfdruck der übrigen Komponenten im Reaktionsgemisch bei der vorgegebenen Temperatur. Auf diese Weise kann insbesondere die Abscheidung von Ammoniak begünstigt und somit die Hydrolyse der Säureamidgruppen beschleunigt werden.

Die in dieser Stufe einsetzbaren Apparaturen/Reaktoren sind mit denen der Stufe 1, wie oben diskutiert, identisch.

In einer bevorzugten Ausführungsform wird bei der zweiphasigen Fahrweise der Reaktor der ersten Stufe von oben nach unten durchströmt, wobei dieser wiederum bevorzugt mit Füllkörpern versehen ist, die eine axiale Rückvermischung der Reaktanden einschränken. Hierdurch erreicht das im Reaktor freiwerdende Ammonik-Gas welches vorwiegend direkt nach dem Eintritt in den Reaktor entsteht, auf kürzestem Weg die Gasphase am Kopf des Reaktors. Die Störung des Strömungsprofils im weiteren Verlauf des Reaktors durch aufsteigende Gasblasen bzw. Konvektion ist deshalb gering.

Die Verweilzeit in dieser Stufe unterliegt ebenfalls keinen Beschränkungen, aus wirtschaftlichen Gründen wählt man sie jedoch im allgemeinen im Bereich zwischen 10 Minuten bis 3 Stunden, vorzugsweise zwischen 20 bis 90 Minuten.

Das in Stufe 3 erhaltene Produktgemisch kann dann, wie weiter unten beschrieben, weiterverarbeitet werden.

In einer bevorzugten Ausführungsform wird das Produktgemisch der Stufe 3 in einer vierten Stufe einer Nachkondensation bei einer Temperatur von 200 bis 350 °C, vorzugsweise einer Temperatur von 220 bis 300 °C und insbesondere 250 bis 270 °C unterworfen. Stufe 4 wird bei einem Druck durchgeführt, der unterhalb des Drucks der Stufe 3 liegt, und vorzugsweise in einem Bereich von 5 bis 1000 x 10³ Pa, weiter bevorzugt 10 bis 300 x 10³ Pa liegt. Im Rahmen dieser Stufe werden Temperatur und Druck so gewählt, daß eine zweite Gasphase und eine zweite flüssige oder feste Phase oder ein Gemisch aus zweiter flüssiger und zweiter fester Phase, die das Polyamid enthalten, erhalten werden.

Vorzugsweise wird die Nachkondensation gemäß Stufe 4 so durchgeführt, daß die relative Viskosität (gemessen bei einer Temperatur von 25 °C und einer Konzentration von 1 g Polymer pro 100 ml in 96 Gew.-%iger Schwefelsäure) des Polyamids einen Wert im Bereich von ungefähr 1,6 bis ungefähr 3,5 einnimmt.

In einer bevorzugten Ausführungsform kann man aus der flüssigen Phase gegebenenfalls vorhandenes Wasser mittels eines Inertgases wie Stickstoff austreiben.

Die Verweilzeit des Reaktionsgemischs in Stufe 4 richtet sich insbesondere nach der gewünschten relativen Viskosität, der Temperatur, dem Druck und der in Stufe 3 zugesetzten Wassermenge.

Wird die Stufe 3 einphasig betrieben, so können in der Produktleitung zwischen der Stufe 3 und der Stufe 4 ggf. Füllkörper, bestehend z.B. aus Raschig-Ringen oder Sulzer-Mischelementen, eingesetzt werden, welche eine kontrollierte Entspannung des Reaktionsgemischs in der Gasphase ermöglichen.

In einer weiteren Ausführungsform kann erfindungsgemäß auf Stufe 3 verzichtet werden und zur Herstellung des Polyamid die Stufen (1), (2) und (4) ausgeführt werden.

### Vorzugsweise wird diese Variante wie folgt durchgeführt:

In Stufe 1 wird mindestens ein Aminoalkylnitril mit einem Überschuß an Wasser auf eine Temperatur im Bereich von 250 bis 350 °C, weiter bevorzugt 270 bis 300°C und einem Druck von 6 bis 12 x 10⁶ Pa erhitzt, wobei man Druck und Temperatur so aufeinander abstimmt, daß das Reaktionsgemisch einphasig flüssig vorliegt, und wobei der Umsatz an Nitrilgruppen nicht kleiner als 95 mol-%, weiter bevorzugt im Bereich von 97 bis 99 mol-%, bezogen auf die Mol-Zahl an eingesetztem Aminoalkylnitril, beträgt, wobei ein Umsetzungsgemisch erhalten wird.

Das Umsetzungsgemisch wird in Stufe 2 bei einer Temperatur im Bereich von 220 bis 300 °C, weiter bevorzugt 250 bis 270°C und einem Druck im Bereich von 1 bis 7 x 10⁶ Pa behandelt, weiter bevorzugt 1 bis 4 x 10⁶ Pa, wobei der Druck in der zweiten Stufe mindestens 0,5 x 10⁶ Pa niedriger ist als in Stufe 1. Gleichzeitig wird die entstandene erste Gasphase von der ersten flüssigen Phase abgetrennt.

Die in Stufe 2 erhaltene erste flüssige Phase wird in Stufe 3 bei einer Temperatur im Bereich von 220 bis 300°C, weiter bevorzugt 250 bis 270°C und einem Druck im Bereich von 10 bis 300 x 10³ Pa, weiter bevorzugt ungefähr Atmosphärendruck, behandelt, wobei die dabei enstehende zweite, Wasser und Ammoniak enthaltende Gasphase von der zweiten flüssigen Phase abgetrennt wird. Innerhalb dieser Stufe wird die relative Viskosität (gemessen wie oben definiert) des erhaltenen Polyamids auf einen gewünschten Wert im Bereich von ungefähr 1,6 bis ungefähr 3,5 durch Wahl der Temperatur und der Verweilzeit eingestellt.

Anschließend wird die so erhaltene zweite flüssige Phase nach üblichen Methoden ausgetragen und, falls dies erwünscht ist, aufgearbeitet.

Die oben beschriebenen Verfahren, d.h. die erfindungsgemäße Abfolge der Stufen (1) bis (3) oder (1), (2) und (4) oder (1) bis (4) kann entweder diskontinuierlich, d.h. in einem Reaktor zeitlich nacheinander, oder kontinuierlich, d.h. in aufeinanderfolgenden Reaktoren zur gleichen Zeit, durchgeführt werden. Selbstverständlich ist es auch möglich, einen Teil der Stufen, beispielsweise Stufen (1) und (2) kontinuierlich und die restliche(n) Stufe(n) diskontinuierlich ausgeführt werden.

In einer weiteren bevorzugten Ausführungsform der vorliegenden Erfindung kann mindestens eine der in den jeweiligen Stufen erhaltenen Gasphasen in mindestens eine der vorhergehenden Stufen zurückgeführt werden.

Es ist weiterhin bevorzugt, daß in Stufe 1 oder in Stufe 3 oder sowohl in Stufe 1 als auch in Stufe 3 die Temperatur und der Druck so gewählt werden, daß eine flüssige oder eine feste Phase oder ein Gemisch aus flüssiger und fester Phase und eine gasförmige Phase erhalten werden, und die gasförmige Phase abgetrennt wird.

Ferner kann man im Rahmen des erfindungsgemäßen Verfahrens auch eine Kettenverlängerung oder eine Verzweigung oder eine Kombination aus beidem durchführen. Dazu werden dem Fachmann bekannte Substanzen zur Verzweigung bzw. Kettenverlängerung von Polymeren in den einzelnen Stufen zugesetzt. Vorzugsweise werden diese Substanzen in Stufe 3 oder 4 zugesetzt.

### Als einsetzbare Substanzen sind zu nennen:

Trifunktionelle Amine oder Carbonsäuren als Vernetzer. Beispiele geeigneter mindestens trifunktioneller Amine oder Carbonsäuren sind beschrieben in der EP-A-O 345 648. Die mindestens trifunktionellen Amine weisen mindestens drei Aminogruppen auf, die zur Umsetzung mit Carbonsäuregruppen fähig sind. Sie weisen vorzugsweise keine Carbonsäuregruppen auf. Die mindestens trifunktionellen Carbonsäuren weisen mindestens drei zur Umsetzung mit Aminen befähigte Carbonsäuregruppen auf, die beispielsweise auch in Form ihrer Derivate, wie Ester, vorliegen können. Die Carbonsäuren weisen vorzugsweise keine zur Reaktion mit Carbonsäuregruppen befähigten Aminogruppen auf. Beispiele geeigneter Carbonsäuren sind Trimesinsäure, trimerisierte Fettsäuren, die beispielsweise aus Ölsäure hergestellt sein können und 50 bis 60 C-Atome aufweisen können, Naphthalinpolycarbonsäuren, wie Naphthalin-1,3,5,7-tetracarbonsäure. Vorzugsweise sind die Carbonsäuren definierte organische Verbindungen und keine polymeren Verbindungen.

Amine mit mindestens 3 Aminogruppen sind beispielsweise Nitrilotrialkylamin, insbesondere Nitrilotriethanamin, Dialkylentriamine, insbesondere Diethylentriamin, Trialkylentetramine und Tetraalkylenpentamine, wobei die Alkylenreste vorzugsweise Ethylenreste sind. Weiterhin können als Amine Dendrimere verwendet werden. Vorzugsweise weisen die Dendrimere die allgemeine Formel I auf

(R₂N-(CH₂)ₙ)₂N-(CH₂)ₓ-N((Ch₂)ₙ-NR₂)₂ (I)

in der
R H oder -(CH₂)ₙ-NR¹₂ mit
R¹ H oder -(CH₂)ₙ-NR²₂ mit
R² H oder -(CH₂)ₙ-NR³₂ mit
R³ H oder -(CH₂)ₙ-NH₂ ist,
n einen ganzzahligen Wert von 2 bis 6 hat und
x einen ganzzahligen Wert von 2 bis 14 hat.

Vorzugsweise weist n einen ganzzahligen Wert von 3 oder 4, insbesondere 3 und x einen ganzzahligen Wert von 2 bis 6, vorzugsweise von 2 bis 4, insbesondere 2 auf. Die Reste R können auch unabhängig voneinander die angegebenen Bedeutungen haben. Vorzugsweise ist der Rest R ein Wasserstoffatom oder ein Rest -(CH₂)ₙ-NH₂.

Geeignete Carbonsäuren sind solche mit 3 bis 10 Carbonsäuregruppen, vorzugsweise 3 oder 4 Carbonsäuregruppen. Bevorzugte Carbonsäuren sind solche mit aromatischen und/oder heterocyclischen Kernen. Beispiele sind Benzyl-, Naphthyl-, Anthracen-, Biphenyl-, Triphenylreste oder Heterocyclen wie Pyridin, Bipyridin, Pyrrol, Indol, Furan, Thiophen, Purin, Chinolin, Phenanthren, Poryphin, Phthalocyanin, Naphthalocyanin. Bevorzugt sind 3,5,3',5'-Biphenyltetracarbonsäure-Phthalocyanin, Naphthalocyanin, 3,5,5',5'-Biphenyltetracarbonsäure, 1,3,5,7-Naphthalintetracarbonsäure, 2,4,6-Pyridintricarbonsäure, 3,5,3'5'-Bipyridyltetracarbonsäure, 3,5,3'5'-Benzophenontetracarbonsäure, 1,3,6,8-Akridintetracarbonsäure, besonders bevorzugt 1,3,5-Benzoltricarbonsäure (Trimesinsäure) und 1,2,4,5-Benzoltetracarbonsäure. Derartige Verbindungen sind technisch erhältlich oder können nach dem in der DE-A-4 312 182 beschriebenen Verfahren hergestellt werden. Bei der Verwendung von ortho-substituierten aromatischen Verbindungen wird vorzugsweise eine Imidbildung durch Wahl geeigneter Umsetzungstemperaturen verhindert.

Diese Substanzen sind mindestens trifunktionell, vorzugsweise mindestens tetrafunktionell. Dabei kann die Anzahl der funktionellen Gruppen 3 bis 16, vorzugsweise 4 bis 10, besondedrs bevorzugt 4 bis 8 betragen. Es werden in den erfindungsgemäßen Verfahren entweder mindestens trifunktionelle Amine oder mindestens trifunktionelle Carbonsäuren eingesetzt, jedoch keine Gemische aus entsprechenden Aminen oder Carbonsäuren. Geringe Mengen an mindestens trifunktionellen Aminen können jedoch den trifunktion ellen Carbonsäuren enthalten sein und umgekehrt.

Die Substanzen liegen in der Menge von 1 bis 50 µmol/g Polyamid, vorzugsweise 1 bis 35, besonders bevorzugt 1 bis 20 µmol/g Polyamid vor. Vorzugsweise sind die Substanzen in einer Menge von 3 bis 150, besonders bevorzugt 5 bis 100, insbesondere 10 bis 70 µmol/g Polyamid an Äquivalenten enthalten. Die Äquivalente beziehen sich dabei auf die Anzahl der funktionellen Aminogruppen oder Carbonsäuregruppen.

Difunktionelle Carbonsäuren oder difunktionelle Amine als Kettenverlängerungsmittel. Sie weisen somit 2 Carbonsäuregruppen auf, die mit Aminogruppen umgesetzt werden können oder 2 Aminogruppen, die mit Carbonsäuren umgesetzt werden können. Die difunktionellen Carbonsäuren oder Amine enthalten außer den Carbonsäuregruppen oder Aminogruppen keine weiteren funktionellen Gruppen, die mit Aminogruppen oder Carbonsäuregruppen reagieren können. Vorzugsweise enthalten sie keine weiteren funktionellen Gruppen. Beispiele geeigneter difunktioneller Amine sind solche, die mit difunktionellen Carbonsäuren Salze bilden. Sie können linear aliphatisch sein, wie C₁₋₁₄-Alkylendiamin, vorzugsweise C₂₋₆-Alkylendiamin, beispielsweise Hexylendiamin. Sie können zudem cycloaliphatisch sein. Beispiele sind Isophorondiamin, Dicycycan, Laromin. Verzweigte aliphatische Diamine sind ebenfalls verwendbar, ein Beispiel ist Vestamin TMD (Trimethylhexamethylendiamin, hergestellt von der Hüls AG). Zudem können die Diamine aromatisch-aliphatisch sein, beispielsweise kann n-Xylylendiamin verwendet werden. Die gesamten Amine können jeweils durch C₁₋₁₂-, vorzugsweise C₁₋₁₄-Alkylreste am Kohlenstoffgerüst substituiert sein.

Difunktionelle Carbonsäuren sind beispielsweise solche, die mit difunkitionellen Diaminen Salze bilden. Es können lineare aliphatische Dicarbonsäuren sein, die vorzugsweise C₄₋₂₀-Dicarbonsäuren sind. Beispiele sind Adipinsäure, Azelainsäure, Sebazinsäure, Suberinsäure. Sie können zudem aromatisch sein. Beispiele sind Isophtalsäure, Terephthalsäure, Naphthalindicarbonsäure, wie auch dimersierte Fettsäuren.

Die difunktionellen Grundbausteine (c) werden vorzugsweise in Mengen von 1 bis 55, besonders bevorzugt 1 bis 30, insbesondere 1 bis 15 µm/g Polyamid eingesetzt.

Erfindungsgemäß trägt man das in Stufe 3 erhaltene Produktgemisch oder die zweite flüssige oder zweite feste Phase oder das Gemisch aus zweiter flüssiger und zweiter fester Phase (aus Stufe 4), die das Polyamid enthalten, vorzugsweise eine Polymerschmelze, nach üblichen Methoden, beispielsweise mit Hilfe einer Pumpe, aus dem Reaktionsgefäß aus. Anschließend kann man das erhaltene Polyamid nach an sich bekannten Mehtoden, wie sie z.B. in der DE-A 43 21 683 (S. 3, Z. 54 bis S. 4, Z.3) ausführlich beschrieben sind, aufarbeiten.

In einer bevorzugten Ausführungsform kann man den Gehalt von erfindungsgemäße erhaltenem Polyamid-6 an cyclischem Dimer weiter reduzieren, indem man das Polyamit zuerst mit einer wäßrigen Lösung von Caprolactam und anschließend mit Wasser extrahiert und/oder der Gasphasenextraktion (beispielsweise beschreiben in der EP-A 28 49 68) unterwirft. Die bei dieser Nachbehandlung anfallenden niedermolekularen Bestandteile wie Caprolactam und seine linearen sowie cyclischen Oligomere, kann man in die erste und/oder zweite und/oder dritte Stufe zurückführen.

Dem Ausgangsmonomer bzw. Monomerengemisch in allen Stufen können bevorzugt in der vierten Stufe, übliche Zusatz- und Füllstoffe wie Pigmente, insbesondere Titandioxid (Anatas und/oder Rutil), Siliciumdioxid und Talk, Kettenregler wie aliphatische und aromatische Carbon- und Dicarbonsäuren wie Propionsäure, Essigsäure, Benzoesäure, Terephthalsäure sowie Triacetondiamin, Stabilisatoren wie Kupfer(I)halogenide und Alkalimetallhalogenide, Nukleierungsmittel wie Magnesiumsilikat oder Bornitrid, Katalysatoren wie phosphorige Säure sowie Antioxidantien in Mengen im Bereich von 0,01 bis 5, bevorzugt von 0,2 bis 2 Gew.-%, bezogen auf die Menge an eingesetzten Monomeren, zugesetzt werden.

Die erfindungsgemäß erhaltenen bzw. erfindungsgemäßen Polyamide, insbesondere Polyamid-6 und dessen Copolymere, kann man zur Herstellung von Fasern und Werkstoffen verwenden.

### BEISPIELE

### Beispiel 1

Dieses Beispiel erläutert die vorliegende Erfindung am Beispiel der Umsetzung von ACN.

Die Bestimmung der AEG (Aminoendgruppen) und CEG (Carboxylendgruppen) erfolgte nach der in der WO 95/01389 (S.6, Z.35 bis S.7, Z.40) beschriebenen Methode.

Die Bestimmung der flüchtigen Basen erfolgte nach Parnas-Wagner durch Hydrolyse des Polyamids mit HCI, Freisetzung der Basen mit NaOH, anschließende Wasserdampfdestillation (nach Parnas) der freigesetzten Basen in eine Vorlage mit HCl und schließlich Rücktitration der überschüssigen HCl mit NaOH. Aus der Differenz an eingesetzter HCl in der Vorlage und zurücktitrierter HCl läßt sich der Gehalt an flüchtigen Basen (in mg NH₃/kg) errechnen.

Der Umsatz an Nitrilgruppen wurde IR-spektroskopisch mittels FTIR anhand der für die -CN-Gruppe charakteristischen Bande bei 2247 cm⁻¹ ermittelt.

Die relative Viskosität (RV) wurde bei einer Temperatur von 25 °C und einer Konzentration von 1g Polymer pro 100 ml in 96 Gew.-%iger Schwefelsäure bestimmt.

Bei allen aufgelisteten Versuchen wurde im Laborautoklaven diskontinuierlich (3 h, 250 °C, 10⁵Pa (1bar)) nachkondensiert (Stufe 4).

Die Ergebnisse und Versuchsbedingungen sind in Tabelle 1 gezeigt.

### Beispiel 2

In der untenstehenden Tabelle sind die Versuchsbedingungen in Stufe 1 und 2 angegeben. Die Temperatur in der vierten Stufe betrug 270 °C, der Druck 10⁵Pa (1 bar) und die Verweilzeit 1,5 h.

| Stufe 1 | | | | | Stufe 2 | | | | |
|---|---|---|---|---|---|---|---|---|---|
| ACN/H₂0 [mol] | Zeit [min] | T (°C) | p [bar] | ACN-Umsatz [%] | Zeit [min] | T [°C] | p [bar] | RV | flüssige Basen [mg NH₃/k g] |
| 1:6 | 200 | 250 | 90 | 97 | 240 | 252 | 36 | 2,14 | 240 |
| AEG: 65 mmol/kg | | | | | | | | | |
| CEG: 55 mmol/kg | | | | | | | | | |
| AEG/CEG = 1.18 | | | | | | | | | |

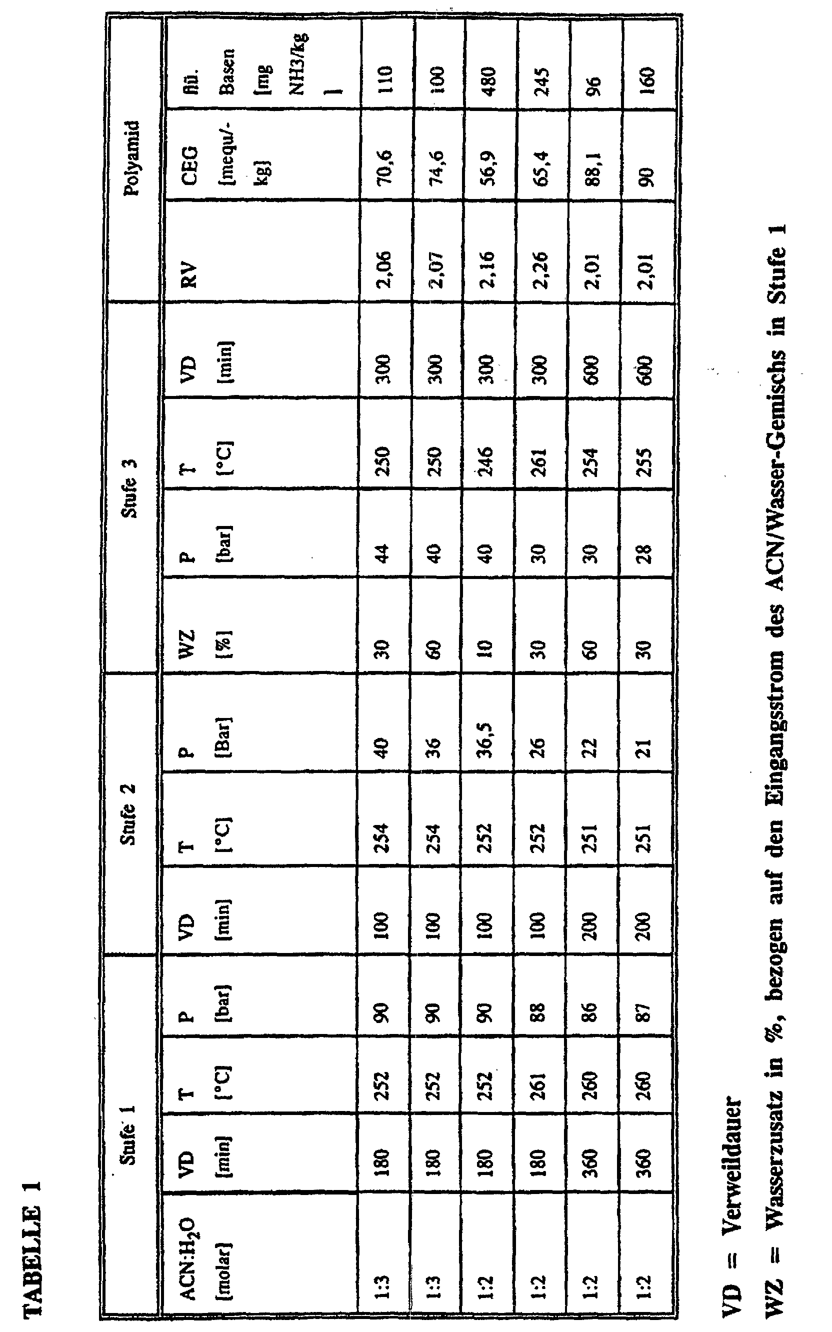

### Vergleichsbeispiele

Die untenstehende Tabelle gibt die Produktkennzahlen von Produkten, hergestellt nach dem Stand der Technik - Bsp. 1 der US 5 109 104 und Bsp. 1 aus US 2 245 129 - wieder.

| | RV | CEG[mequ/kg] | flü. Basen [mg NH3/kg] |
|---|---|---|---|
| US 5 109 104 | 1,76 | 19 | 1910 |
| US 2 245 129 | 1,82 | 10 | 3150 |

## Patentansprüche

1. Verfahren zur Herstellung eines Polyamids durch Umsetzung mindestens eines Aminonitrils mit Wasser, das die folgenden Stufen umfaßt:
(1) Umsetzung mindestens eines Aminonitrils mit. Wasser in einem Molverhältnis im Bereich von 1:1 bis 1:30 bei einer Temperatur von 100 bis 360 °C, und einem Druck von 6 bis 12 x 10⁶ Pa, wobei ein Umsetzungsgemisch erhalten wird,
(2) weitere Umsetzung des Umsetzungsgemischs bei einer Termperatur von 150 bis 400 °C und einem Druck, der niedriger ist, als der Druck in Stufe 1, wobei die Temperatur und der Druck so gewählt werden, daß eine erste Gasphase und eine erste flüssige oder eine erste feste Phase oder ein Gemisch aus erster fester und erster flüssiger Phase erhalten werden, und die erste Gasphase von der ersten flüssigen oder der ersten festen Phase oder dem Gemisch aus erster flüssiger und erster fester Phase abgetrennt wird, und
(3) Versetzen der ersten flüssigen oder der ersten festen Phase oder des Gemischs aus erster flüssiger und erster fester Phase mit einer gasförmigen oder flüssigen Phase, die Wasser enthält, bei einer Temperatur von 150 bis 400 °C, und einem Druck von 0,1 bis 30 x 10⁶ Pa, wobei ein Produktgemisch erhalten wird.

2. Verfahren zur Herstellung eines Polyamids durch Umsetzung mindestens eines Aminonitrils mit Wasser, das die folgenden Stufen umfaßt:
(1) Umsetzung mindestens eines Aminonitrils mit Wasser in einem Molverhältnis im Bereich von 1:1 bis 1:30 bei einer Temperatur von 100 bis 360 °C, und einem Druck von 6 bis 12 x 10⁶ Pa, wobei ein Umsetzungsgemisch erhalten wird,
(2) weitere Umsetzung des Umsetzungsgemischs bei einer Termperatur von 150 bis 400 °C und einem Druck, der niedriger ist, als der Druck in Stufe 1, wobei die Temperatur und der Druck so gewählt werden, daß eine erste Gasphase und eine erste flüssige oder eine erste feste Phase oder ein Gemisch aus erster fester und erster flüssiger Phase erhalten werden, und die erste Gasphase von der ersten flüssigen oder der ersten festen Phase oder dem Gemisch aus erster flüssiger und erster fester Phase abgetrennt wird, und
(3) Versetzen der ersten flüssigen oder der ersten festen Phase oder des Gemischs aus erster flüssiger und erster fester Phase mit einer gasförmigen oder flüssigen Phase, die Wasser enthält, bei einer Temperatur von 150 bis 400 °C, und einem Druck von 0,1 bis 30 x 10⁶ Pa, wobei ein Produktgemisch erhalten wird.
(4) Nachkondensation des Produktgemischs bei einer Temperatur von 200 bis 350 °C und einem Druck, der niedriger ist als der Druck der Stufe 3, wobei die Temperatur und der Druck so gewählt werden, daß eine zweite, Wasser und Ammoniak enthaltende Gasphase und eine zweite flüssige oder zweite feste Phase oder ein Gemisch aus zweiter flüssiger und zweiter fester Phase, die (das) jeweils das Polyamid enthält, erhalten werden.

3. Verfahren zur Herstellung eines Polyamids durch Umsetzung mindestens eines Aminonitrils mit Wasser, das die folgenden Stufen umfaßt:
(1) Umsetzung mindestens eines Aminonitrils mit Wasser in einem Molverhältnis im Bereich von 1:1 bis 1:30 bei einer Temperatur von 100 bis 360 °C, und einem Druck von 6 bis 12 x 10⁶ Pa, wobei ein Umsetzungsgemisch erhalten wird,
(2) weitere Umsetzung des Umsetzungsgemischs bei einer Termperatur von 150 bis 400 °C und einem Druck, der niedriger ist, als der Druck in Stufe 1, wobei die Temperatur und der Druck so gewählt werden, daß eine erste Gasphase und eine erste flüssige oder eine erste feste Phase oder ein Gemisch aus erster fester und erster flüssiger Phase erhalten werden, und die erste Gasphase von der ersten flüssigen oder der ersten festen Phase oder dem Gemisch aus erster flüssiger und erster fester Phase abgetrennt wird, und
(4) Nachkondensation der ersten flüssigen oder der ersten festen Phase oder des Gemischs aus erster flüssiger und erster fester Phase bei einer Temperatur von 200 bis 350 °C, wobei die Temperatur und der Druck so gewählt werden, daß eine zweite, Wasser und Ammoniak enthaltende Gasphase und eine zweite flüssige oder zweite feste Phase oder ein Gemisch aus zweiter flüssiger und zweiter fester Phase, die (das) jeweils das Polyamid enthält, erhalten werden.

4. Verfahren nach Anspruch 1 oder 2, wobei in Stufe 1 oder in Stufe 3 oder sowohl in Stufe 1 als auch in Stufe 3 die Temperatur und der Druck so gewählt werden, daß eine flüssige oder eine feste Phase oder ein Gemisch aus flüssiger und fester Phase und eine gasförmige Phase erhalten werden, und die gasförmige Phase abgetrennt wird.

5. Verfahren nach einem der vorstehenden Ansprüche, wobei die Umsetzung gemäß Stufe 1 bis zu einem Umsatz an Nitril-Gruppen von mindestens 95 mol-%, bezogen auf die Molzahl an eingesetzem Aminonitril, durchgeführt wird.

6. Verfahren nach einem der Ansprüche 1, 2, 4 oder 5, wobei in Stufe 3 die gasförmige oder flüssige Phase, die Wasser enthält, in einer Menge von 50 bis 1500 ml Wasser pro 1 kg erste flüssige oder erste feste Phase oder Gemisch aus erster flüssiger und erster fester Phase zugesetzt wird.

7. Verfahren nach einem der vorstehenden Ansprüche, wobei die Stufen 1 bis 3, 1, 2 und 4 oder 1 bis 4 kontinuierlich durchgeführt werden.

8. Verfahren nach einem der vorstehenden Ansprüche, wobei mindestens eine der in den jeweiligen Stufen erhaltenen Gasphasen in mindestens eine der vorhergehenden Stufen zurückgeführt wird.

9. Verfahren nach einem der vorstehenden Ansprüche, wobei als Aminonitril ein ω-Aminoalkylnitril mit einem Alkylenrest (-CH₂-) von 4 bis 12 C-Atomen oder ein Aminoalkylarylnitril mit 8 bis 13 C-Atomen umgesetzt wird.

10. Verfahren nach einem der vorstehenden Ansprüche, wobei als Aminonitril folgendes Gemisch eingesetzt wird:
von 50 bis 99,99 Gew.-% 6-Aminocapronitil,
von 0,01 bis 50 Gew.-% mindestens einer Dicarbonsäure, ausgewählt aus der Gruppe bestehend aus aliphatischen C₄-C₁₀-α,ω-Dicarbonsäuren, aromatischen C₈-C₁₂-Dicarbonsäuren und C₅-C₈-Cycloalkandicarbonsäuren,
von 0 bis 50 Gew.-% eines α,ω-Diamins mit 4 - 10 Kohlenstoffatomen,
von 0 bis 50 Gew.-% eines α,ω-C₂-C₁₂ Dinitrils sowie
von 0 bis 50 Gew.-% einer α,ω-C₅-C₁₂-Aminosäure oder des entsprechenden Lactams,
wobei die Summe der einzelnen Gew.-%-Angaben 100 % beträgt.

11. Verfahren nach einem der vorstehenden Ansprüche, wobei eine Kettenverlängerung oder eine Kettenverzweigung oder eine Kombination aus beiden durchgerührt wird.

## Claims

1. A process for preparing a polyamide by reaction of at least one aminonitrile with water, which comprises:
(1) reacting at least one aminonitrile with water in a molar ratio within the range from 1:1 to 1:30 at a temperature from 100 to 360°C and a pressure from 6 to 12 × 10⁶ Pa to obtain a reaction mixture,
(2) further reacting the reaction mixture at a temperature from 150 to 400°C and a pressure which is lower than the pressure in step 1, the temperature and the pressure being selected so as to obtain a first gas phase and a first liquid or a first solid phase or a mixture of first solid and first liquid phase, and the first gas phase is separated from the first liquid or the first solid phase or from the mixture of first liquid and first solid phase, and
(3) admixing the first liquid or the first solid phase or the mixture of first liquid and first solid phase with a gaseous or liquid phase comprising water at a temperature from 150 to 400°C and a pressure from 0.1 to 30 × 10⁶ Pa to obtain a product mixture.

2. A process for preparing a polyamide by reaction of at least one aminonitrile with water, which comprises:
(1) reacting at least one aminonitrile with water in a molar ratio within the range from 1:1 to 1:30 at a temperature from 100 to 360°C and a pressure from 6 to 12 × 10⁶ Pa to obtain a reaction mixture,
(2) further reacting the reaction mixture at a temperature from 150 to 400°C and a pressure which is lower than the pressure in step 1, the temperature and the pressure being selected so as to obtain a first gas phase and a first liquid or a first solid phase or a mixture of first solid and first liquid phase, and the first gas phase is separated from the first liquid or the first solid phase or from the mixture of first liquid and first solid phase, and
(3) admixing the first liquid or the first solid phase or the mixture of first liquid and first solid phase with a gaseous or liquid phase comprising water at a temperature from 150 to 400°C and a pressure from 0.1 to 30 × 10⁶ Pa to obtain a product mixture,
(4) postcondensing the product mixture at a temperature from 200 to 350°C and a pressure which is lower than the pressure of step 3, the temperature and pressure being selected so as to obtain a second, water- and ammonia-comprising gas phase and a second liquid or second solid phase or a mixture of second liquid and second solid phase, which each comprise the polyamide.

3. A process for preparing a polyamide by reaction of at least one aminonitrile with water, which comprises:
(1) reacting at least one aminonitrile with water in a molar ratio within the range from 1:1 to 1:30 at a temperature from 100 to 360°C and a pressure from 6 to 12 × 10⁶ Pa to obtain a reaction mixture,
(2) further reacting the reaction mixture at a temperature from 150 to 400°C and a pressure which is lower than the pressure in step 1, the temperature and the pressure being selected so as to obtain a first gas phase and a first liquid or a first solid phase or a mixture of first solid and first liquid phase, and the first gas phase is separated from the first liquid or the first solid phase or from the mixture of first liquid and first solid phase, and
(4) postcondensing the first liquid or the first solid phase or the mixture of first liquid and first solid phase at a temperature from 200 to 350°C, the temperature and pressure being selected so as to obtain a second, water- and ammonia-comprising gas phase and a second liquid or second solid phase or a mixture of second liquid and second solid phase, which each comprise the polyamide.

4. A process as claimed in claim 1 or 2, wherein the temperature and pressure in step 1 or in step 3 or in both step 1 and step 3 are selected so as to obtain a liquid or a solid phase or a mixture of liquid and solid phase and a gaseous phase, and the gaseous phase is separated off.

5. A process as claimed in any of the preceding claims, wherein the reaction of step 1 is carried on to a nitrile group conversion of at least 95 mol%, based on the moles of aminonitrile used.

6. A process as claimed in any of claims 1, 2, 4 and 5, wherein, in step 3, the gaseous or liquid phase comprising water is added in an amount from 50 to 1500 ml of water per 1 kg of first liquid or first solid phase or mixture of first liquid and first solid phase.

7. A process as claimed in any of the preceding claims, wherein steps 1 to 3, 1, 2 and 4 or 1 to 4 are carried out continuously.

8. A process as claimed in any of the preceding claims, wherein at least one of the gas phases obtained in the respective stages is recycled into at least one of the preceding stages.

9. A process as claimed in any of the preceding claims, wherein the aminonitrile used is an ω-aminoalkyl nitrile having an alkylene moiety (-CH₂-) of from 4 to 12 carbon atoms or an aminoalkylaryl nitrile having 8 to 13 carbon atoms.

10. A process as claimed in any of the preceding claims, wherein the following mixture is used as aminonitrile:
from 50 to 99.99% by weight of 6-aminocapronitrile,
from 0.01 to 50% by weight of at least one dicarboxylic acid selected from the group consisting of aliphatic C₄-C₁₀-α,ω-dicarboxylic acids, aromatic C₈-C₁₂-dicarboxylic acids and C₅-C₈-cycloalkanedicarboxylic acids,
from 0 to 50% by weight of an α,ω-diamine having 4-10 carbon atoms,
from 0 to 50% by weight of an α,ω-C₂-C₁₂-dinitrile, and
from 0 to 50% by weight of an α,ω-C₅-C₁₂-amino acid or the corresponding lactam,
the individual weight percentages adding up to 100%.

11. A process as claimed in any of the preceding claims, wherein a chain lengthening or a chain branching or a combination thereof is carried out.

## Revendications

1. Procédé de préparation d'un polyamide par réaction d'au moins un aminonitrile avec de l'eau, comprenant les étapes suivantes:
(1) Réaction d'au moins un aminonitrile avec de l'eau en proportion molaire de l'ordre de 1 : 1 à 1 : 30 à une température de 100 à 360°C, et une pression de 6 à 12 x 10⁶ Pa, avec obtention d'un mélange réactionnel,
(2) Réaction subséquente du mélange réactionnel, à une température de 150 à 400°C et une pression inférieure à la pression de l'étape 1, où la température et la pression sont choisies de manière à obtenir une première phase gazeuse et une première phase liquide ou une première phase solide, ou un mélange de première phase solide et de première phase liquide, et où la première phase gazeuse est séparée de la première phase liquide ou de la première phase solide ou du mélange de première phase liquide et de première phase solide, et
(3) Mélange de la première phase liquide ou de la première phase solide, ou du mélange de première phase liquide et de première phase solide, à une phase gazeuse ou liquide contenant de l'eau, à une température de 150 à 400°C et une pression de 0,1 à 30 x 10⁶ Pa, avec obtention d'un mélange de produits.

2. Procédé de préparation d'un polyamide par réaction d'au moins un aminonitrile avec. de l'eau, comprenant les étapes suivantes:
(1) Réaction d'au moins un aminonitrile avec de l'eau en proportion molaire de l'ordre de 1 : 1 à 1 : 30 à une température de 100 à 360°C, et une pression de 6 à 12 x 10⁶ Pa, avec obtention d'un mélange réactionnel,
(2) Réaction subséquente du mélange réactionnel, à une température de 150 à 400°C et une pression inférieure à la pression de l'étape 1, où la température et la pression sont choisies de manière à obtenir une première phase gazeuse et une première phase liquide ou une première phase solide, ou un mélange de première phase solide et de première phase liquide, et où la première phase gazeuse est séparée de la première phase liquide ou de la première phase solide ou du mélange de première phase liquide et de première phase solide, et
(3) Mélange de la première phase liquide ou de la première phase solide, ou du mélange de première phase liquide et de première phase solide, à une phase gazeuse ou liquide contenant de l'eau, à une température de 150 à 400°C et une pression de 0,1 à 30 x 10⁶ Pa, avec obtention d'un mélange de produits,
(4) Post-condensation du mélange de produits à une température de 200 à 350°C et une pression inférieure à la pression de l'étape 3,
où la température et la pression sont choisies de manière à obtenir une deuxième phase gazeuse contenant de l'eau et de l'ammoniac et une deuxième phase liquide ou une deuxième phase solide, ou un mélange de deuxième phase liquide et de deuxième phase solide, contenant à chaque fois le polyamide.

3. Procédé de préparation d'un polyamide par réaction d'au moins un aminonitrile avec de l'eau, comprenant les étapes suivantes:
(1) Réaction d'au moins un aminonitrile avec de l'eau en proportion molaire de l'ordre de 1 : 1 à 1 : 30 à une température de 100 à 360°C, et une pression de 6 à 12 x 10⁶ Pa, avec obtention d'un mélange réactionnel,
(2) Réaction subséquente du mélange réactionnel, à une température de 150 à 400°C et une pression inférieure à la pression de l'étape 1, où la température et la pression sont choisies de manière à obtenir une première phase gazeuse et une première phase liquide ou une première phase solide, ou un mélange de première phase solide et de première phase liquide, et où la première phase gazeuse est séparée de la première phase liquide ou de la première phase solide ou du mélange de première phase liquide et de première phase solide, et
(4) Post-condensation de la première phase liquide ou de la première phase solide ou du mélange de première phase liquide et de première phase solide à une température de 200 à 350°C, où la température et la pression sont choisies de manière à obtenir une deuxième phase gazeuse contenant de l'eau et de l'ammoniac et une deuxième phase liquide ou une deuxième phase solide, ou un mélange de deuxième phase liquide et de deuxième phase solide, contenant à chaque fois le polyamide.

4. Procédé selon la revendication 1 ou 2, où dans l'étape 1 ou l'étape 3 ou bien dans l'étape 1 et dans l'étape 3, la température et la pression sont choisies de manière à obtenir une phase liquide ou une phase solide ou un mélange de phase liquide et de phase solide, et où la phase gazeuse est séparée.

5. Procédé selon l'une des revendications qui précèdent, où la réaction selon l'étape 1 est effectuée jusqu'à un rendement de conversion des groupes nitriles d'au moins 95% molaires, par rapport au nombre de moles d'aminonitrile mises en oeuvre.

6. Procédé selon l'une des revendications 1, 2, 4 ou 5, où dans l'étape 3, la phase gazeuse ou liquide, contenant de l'eau, est ajoutée en quantité de 50 à 1500 ml d'eau par 1 kg de première phase liquide ou de première phase solide ou de mélange de première phase liquide et de première phase solide.

7. Procédé selon l'une des revendications qui précèdent, où les étapes 1 à 3, 1, 2 et 4 ou 1 à 4 sont entreprises en continu.

8. Procédé selon l'une des revendications qui précèdent, où au moins l'une des phases gazeuses obtenues dans les étapes respectives est recyclée dans au moins une des étapes précédentes.

9. Procédé selon l'une des revendications qui précèdent, où l'on fait réagir, comme aminonitrile, un ω-aminoalkylnitrile avec un radical alkyle (-CH₂-) comportant de 4 à 12 atomes de carbone ou un aminoalkylarylnitrile comportant de 8 à 13 atomes de carbone.

10. Procédé selon l'une des revendications qui précèdent, où l'on met en oeuvre comme aminonitrile le mélange suivant:
de 50 à 99,99% en poids de 6-aminocapronitrile,
de 0,01 à 50% en poids d'au moins un acide dicarboxylique, choisi dans le groupe formé par des acides α,ω-dicarboxyliques aliphatiques en C₄ à C₁₀, des acides dicarboxyliques aromatiques en C₈ à C₁₂ et des acides cycloalcane-dicarboxyliques en C₅ à C₈,
de 0 à 50% en poids d'une α,ω-diamine comportant de 4 à 10 atomes de carbone,
de 0 à 50% en poids d'un α,ω-dinitrile en C₅ à C₁₂, ainsi que
de 0 à 50% en poids d'un α,ω-aminoacide en C₅ à C₁₂ ou du lactame correspondant,
la somme des pourcentages en poids totalisant 100%.

11. Procédé selon l'une des revendications qui précèdent, où l'on opère un allongement de chaîne ou une ramification de chaîne, ou une combinaison des deux.
